# EUROPEAN PATENT APPLICATION

(11) **EP 4 339 044 A1**
(43) Date of publication of application: **20.03.2024**
(21) Application number: 23197531.9
(22) Date of filing: 14.09.2023
(51) Int. Cl.: B60T 13/26, B60T 8/36, B60T 13/68, B60T 15/02

(54) **RELAY VALVE ARRANGEMENT FOR A TRAILER BRAKE SYSTEM**

(30) Priority: 14.09.2022 GB 202213451
(71) Applicant: KNORR-BREMSE Systeme für Nutzfahrzeuge GmbH, 80809 München (DE)
(72) Inventor: Majláth, Attila, 80809 Munich (DE); Koncz, Laszlo, 80809 Munich (DE); Jakab, Dávid, 80809 Munich (DE)
(74) Representative: JENSEN & SON

(57) **Abstract**

The invention relates to a valve arrangement for a trailer brake module, which module has an input for a brake supply pressure (1) and an input for a brake control pressure (4) and an output for supplying a brake pressure to braking devices on a trailer (21), wherein the valve arrangement comprises a relay valve (30) for applying and releasing the brake pressure to the braking devices, the valve arrangement further comprising a load solenoid (50), an exhaust solenoid (52) and a back up solenoid (51), which solenoids are adapted to control pressure to a pilot port on the relay valve, wherein the brake pressure can be modulated, wherein the output of the solenoids is arranged substantially transversely to the direction of motion of the relay valve.

## Description

The invention relates to a relay valve arrangement for a trailer brake system.

DE102016116516 discloses a known type of trailer brake system relay valve in which the brake system includes a main valve unit; a pilot-control valve unit that is fluidically connected to the main valve unit; and a two part housing to accommodate at least the main valve unit and the pilot-control valve unit. The pilot-control valve unit includes a double solenoid unit and at least one valve device, in which the double solenoid unit is formed such that it can be populated with at least one valve device, and in which the double solenoid unit has at least two accommodating portions for accommodating valve devices and at least two solenoid devices for actuating the valve devices.

CN108248591 discloses a further valve arrangement for a trailer brake system. The integrated EBS trailer valve comprises a valve body assembly, an upper cover assembly and a throttling piston assembly. A pressure sensor and an electromagnetic valve assembly are arranged in the trailer valve. In use the electromagnetic valve assembly can control the pressures in a trailer brake chamber and the trailer brake chamber pressure is monitored in real time through the pressure sensor.

WO2019158498A1 discloses a trailer control valve for a trailer of an utility vehicle, having at least one housing and at least one housing insert guided in the housing, and having at least one trailer control valve piston with a cylinder section and a collar section, wherein the collar section of the trailer control valve piston is guided in the housing insert in at least a first position at least partially in a receptacle, wherein at least one non-return valve and at least one throttle bore are provided in the region of the receptacle.

In the known solutions the arrangement of relay piston unit is vertical and it is placed in divided (two parts) valve housing as this has proven to be the easiest and lowest cost assembly and also allows for easy maintenance of the valve and associated control electronics.

However, in the highly competitive field of trailer braking systems there is constant demand for reduction in size of the valve and for lower costs both in acquisition, operation and in lifetime maintenance of the brake system.

The present invention therefore seeks to provide a valve arrangement in a trailer brake module which enables the possibility of a smaller valve whilst addressing the lifetime costs of the valve.

According to the invention there is provided a valve arrangement for a trailer brake module, which module has an input for a brake supply pressure and an input for a brake control pressure and an output for supplying a brake pressure to braking devices on a trailer, wherein the valve arrangement comprises a relay valve for applying and releasing the brake pressure to the braking devices, the valve arrangement further comprising a load solenoid, an exhaust solenoid and a back up solenoid, which solenoids are adapted to control pressure to a pilot port on the relay valve, wherein the brake pressure can be modulated, wherein the output of the solenoids is arranged substantially transversely to the direction of motion of the relay valve.

In the invention the relay piston unit is arranged in horizontal position relative to the solenoids in the trailer brake module (TBM). This arrangement facilitates the use of a monoblock housing construction in contrast to the known two part constructions, which are inevitably prone to leak.

Preferably, the valve arrangement is arranged in a monoblock housing. Preferably, the output of the solenoids is arranged substantially perpendicularly to the direction of motion of a piston of the relay valve.

Preferably, the arrangement comprises a pressure transducer located on the output side of the relay valve, an output of the pressure transducer being able to modulate the output pressure of the relay valve. Preferably, the arrangement further comprises at least one solenoid, which solenoid can modulate the pressure on the output side of the relay valve. Preferably, the input for a brake supply pressure and an input for a brake control pressure and the output for supplying a brake pressure to braking devices on a trailer are disposed so that the relay valve can be inserted and removed from one side of the arrangement without removing the solenoids. Preferably, wherein the input for a brake control pressure is arranged substantially perpendicularly to the direction of motion of the relay valve.

Exemplary embodiments of the invention will now be described in greater detail with reference to the drawings in which:
Fig. 1 shows schematically a first arrangement of the valve;
Fig. 2 shows the pneumatic connections of the valve;
Fig. 3 shows a cross section of Fig. 2;
Fig. 4 shows schematically a second arrangement of the valve;
Fig. 5 shows a cut away of the second arrangement.

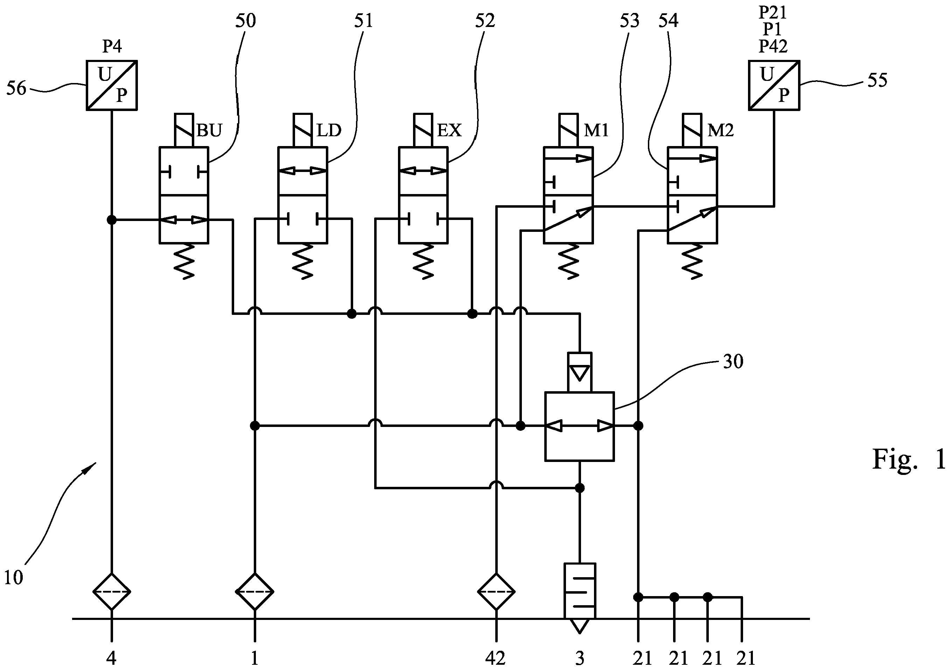

Figure 1 shows schematically the arrangement of the valve comprising a horizontally arranged relay piston unit 10, which valve arrangement is provided with pneumatic inputs for the main supply pressure 1, a control pressure 4 and an air bellow pressure 42. The valve arrangement is further provided with output ports for an exhaust 3 and to the brake chambers 21. Four brake chambers are indicated by way of example as this is commercially the commonest arrangement for a trailer brake system but the invention would be applicable to trailer brake systems in which three axles (eg 6S4M)or only one axle (eg 2S1M) are braked.

The main supply pressure 1 is pneumatically connected to the input of the relay valve 30 as well as to the input of the load solenoid 50. The control pressure 4 is connected to the input of the back up solenoid 51. The relay valve 30 is provided with a first pneumatic output to the brake chambers 21 and a second pneumatic output to the exhaust 3 and to the input of the exhaust solenoid 52. The outputs of the load solenoid 50, back up solenoid 51 and exhaust solenoid 52 are connected to the pilot input of the relay valve 30.

A pressure control valve assembly being a combination of two 2/2 solenoid valves 53 54, one of which 53 is normally open and the other 54 normally closed, controls the flow of air to the brake chambers. The solenoid valve 53 receives inputs from the air bellow pressure input 42 and the main supply pressure and the solenoid 54 receives an input from the output of the relay valve 30. The output of the solenoid 54 is connected to a pressure transducer 55, which measures the pressure out of the relay valve 30. The control pressure input is further connected to a second pressure transducer 56.

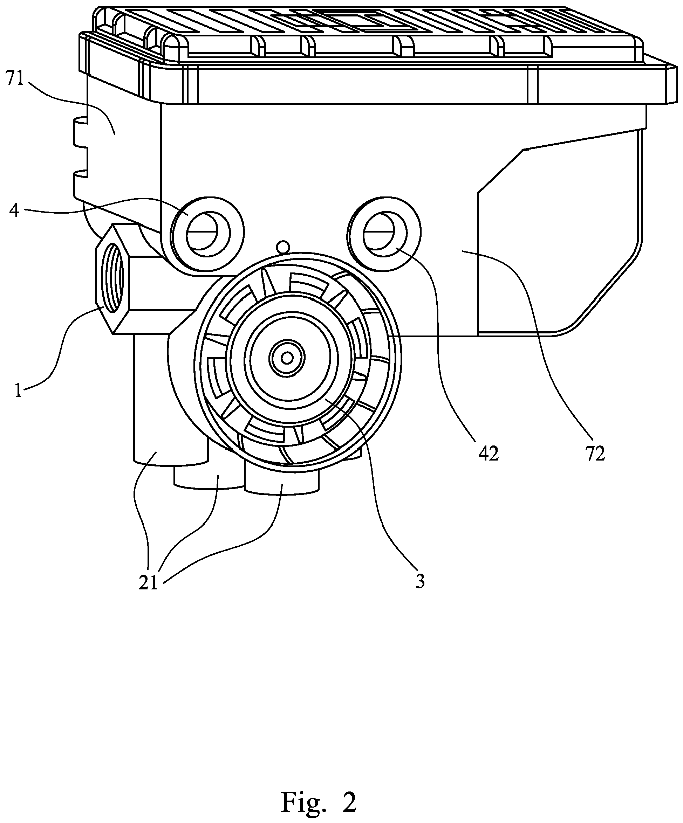

Figure 2 shows the valve arrangement of the invention in a monoblock housing 70, with the main supply pressure port 1, the control pressure port 4 and the air bellow pressure port 42. The main pressure supply port 1 is arranged in a face 71 of the housing perpendicular to the face 72 with the inputs of the control pressure port 4 and air bellow pressure port 42. The outputs to the brake chambers 21 can be seen disposed perpendicularly to both of the faces 71 and 72. The relay valve exhaust is also arranged in the same face 72 as the control pressure port input 4 and air bellow input port 42.

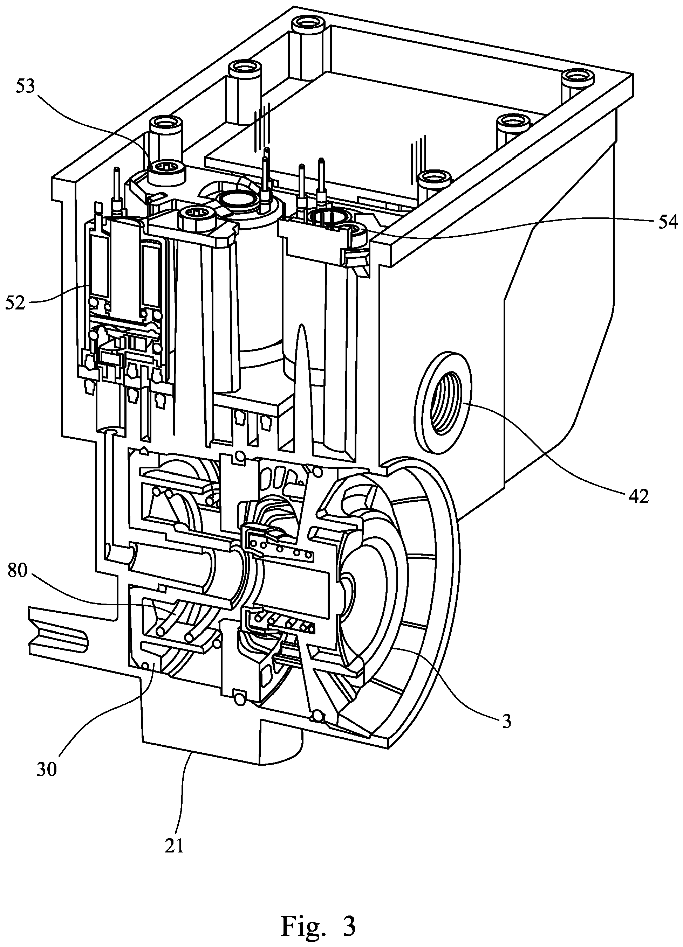

Figure 3 shows a cross section through the valve body shown in Figure 2. The relay valve 30 is arranged perpendicularly to the solenoids. The exhaust solenoid 52 and pressure control solenoids 53 and 54 are shown with the pneumatic connection of the solenoid 52 to the relay valve 30 visible. The relay valve is a piston type valve with O-rings 80 provided to reduce the friction between the piston and piston housing.

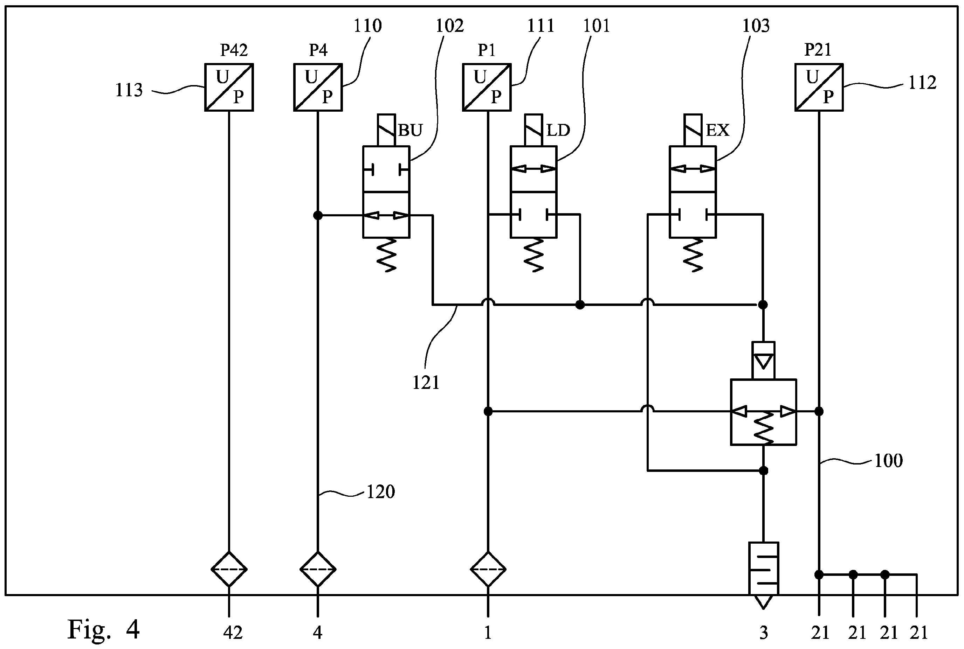

Figure 4 shows an alternative arrangement to that of Figure 1, which does not require multiplexing of the pressure control solenoids for measuring pressures and is therefore lower cost.

Figure 4 shows schematically the arrangement of the valve comprising a horizontally arranged relay piston unit 100, which valve arrangement is provided with pneumatic inputs for the main supply pressure 1, a control pressure 4 and an air bellow pressure 42. The valve arrangement is further provided with output ports for an exhaust 3 and to the brake chambers 21. Four brake chambers are indicated by way of example as this is commercially the commonest arrangement for a trailer brake system but the invention would be applicable to trailer brake systems in which three axles (eg 6S4M)or only one axle (eg 2S1M) are braked.

The main supply pressure 1 is pneumatically connected to the input of the relay valve 100 as well as to the input of the load solenoid 101. The control pressure 4 is connected to the input of the back up solenoid 102. The relay valve 100 is provided with a first pneumatic output to the brake chambers 21 and a second pneumatic output to the exhaust 3 and to the input of the exhaust solenoid 103. The outputs of the load solenoid 101, back up solenoid 102 and exhaust solenoid 103 are connected to the pilot input via path 121 of the relay valve 100.

A pressure transducer 110 is provided in the control pressure pneumatic path 120. A second pressure transducer 111 is provided in the supply pressure path. The pressure transducer 111 is shown on the input side to the back up solenoid 101 A third pressure transducer 112 is arranged on the output side of relay valve 100.

In the embodiment of Figure 4 the air bellow pressure 42 is provided with a pressure transducer 113 and is pneumatically separate from the pneumatic circuit of the relay valve 100.

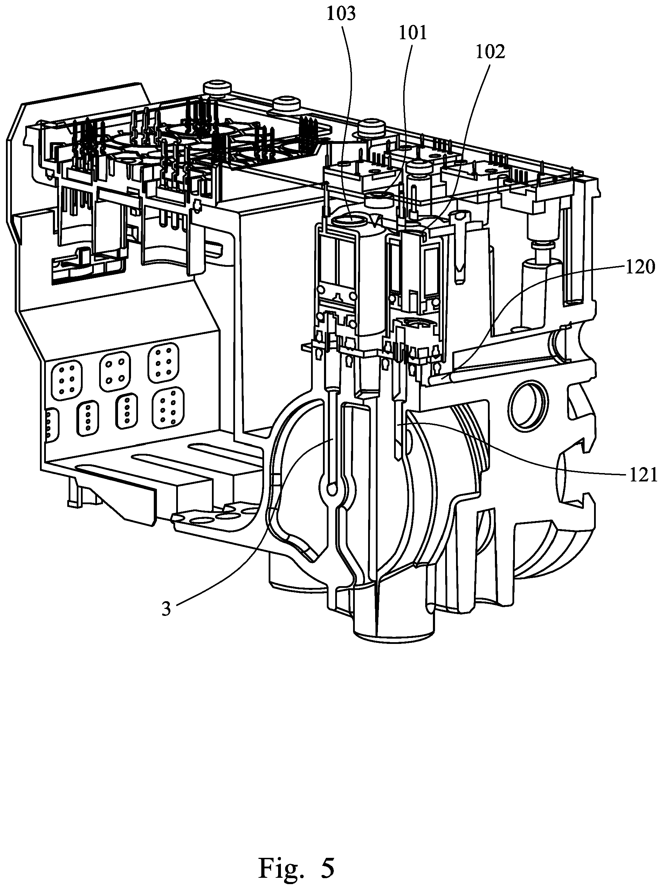

Figure 5 shows a cut away of the valve arrangement of Figure 4 showing the pneumatic path 120 from the control line 4 to the back up solenoid 102 and the control channel 121 to pilot the relay valve 100. Exhaust solenoid 103 controls the flow to the exhaust 3. The load solenoid is 101 disposed behind the solenoids 102 and 103. The control channel 121 and exhaust 3 are located on the side of the valve housing remote from the control pressure input 4.

The horizontal arrangement of the relay valve below the solenoids enables the assembly of the valve to be simplified as the relay valve can be assembled from one direction into a monoblock housing. The monoblock housing can also receive the solenoids without the need for a two stage assembly as in the known valves.

Whilst the relay valve has been described as being horizontal with respect the solenoids, the solenoids need not be substantially perpendicular to the direction of motion of the relay valve piston but can also be at an acute angle thereto in contrast to the conventional, substantially parallel to the direction of motion arrangement of solenoids in known braking relay valves.

## Claims

1. A valve arrangement for a trailer brake module, which module has an input for a brake supply pressure and an input for a brake control pressure and an output for supplying a brake pressure to braking devices on a trailer, wherein the valve arrangement comprises a relay valve for applying and releasing the brake pressure to the braking devices, the valve arrangement further comprising a load solenoid, an exhaust solenoid and a back up solenoid, which solenoids are adapted to control pressure to a pilot port on the relay valve, wherein the brake pressure can be modulated, wherein the output of the solenoids is arranged substantially transversely to the direction of motion of the relay valve.

2. A valve arrangement for a trailer brake module according to Claim 1, wherein the valve arrangement is arranged in a monoblock housing.

3. A valve arrangement according to Claim 1 or Claim 2, wherein the output of the solenoids is arranged substantially perpendicularly to the direction of motion of a piston of the relay valve.

4. A valve arrangement according to Claims 1 to 3, wherein the arrangement comprises a pressure transducer located on the output side of the relay valve, an output of the pressure transducer being able to modulate the output pressure of the relay valve.

5. A valve arrangement according to Claims 1 to 3, wherein the arrangement further comprises at least one solenoid, which solenoid can modulate the pressure on the output side of the relay valve.

6. A valve arrangement according to any one of Claims 1 to 5, wherein the input for a brake supply pressure and an input for a brake control pressure and the output for supplying a brake pressure to braking devices on a trailer are disposed so that the relay valve can be inserted and removed from one side of the arrangement without removing the solenoids.

7. A valve arrangement according to Claim 6, wherein the input for a brake control pressure is arranged substantially perpendicularly to the direction of motion of the relay valve.
